Europäisches Patentamt

(19) European Patent Office

Office européen des brevets

(11) Numéro de publication : **0 200 244**
**B1**

(12) **FASCICULE DE BREVET EUROPÉEN**

(45) Date de publication du fascicule du brevet :
**19.07.89**

(51) Int. Cl.⁴ : **B 64 B   1/58**

(21) Numéro de dépôt : **86200513.9**

(22) Date de dépôt : **27.03.86**

(54) **Dispositif pour l'accouplement d'une enveloppe avec un élément externe à l'enveloppe.**

(30) Priorité : **25.04.85 FR 8506465**

(43) Date de publication de la demande :
**05.11.86 Bulletin 86/45**

(45) Mention de la délivrance du brevet :
**19.07.89 Bulletin 89/29**

(84) Etats contractants désignés :
**BE CH DE FR GB IT LI LU NL**

(56) Documents cités :
**US--A-- 1 609 521**
**US--A-- 2 990 147**
**US--A-- 3 276 726**

(73) Titulaire : **CENTRE NATIONAL D'ETUDES SPATIALES (C.N.E.S.) Etablissement public, scientifique et technique à caractère industriel et commercial 2, place Maurice-Quentin**
**F-75039 Paris Cedex 01 (FR)**

(72) Inventeur : **Regipa, Robert**
**226, avenue Saint-Exupéry Bâtiment Provence**
**F-31400 Toulouse (FR)**

(74) Mandataire : **Barre, Philippe**
**Cabinet Barre-Gatti-Laforgue 95 rue des Amidonniers**
**F-31069 Toulouse Cedex (FR)**

## Description

L'invention concerne un dispositif pour l'accouplement d'une enveloppe gonflable réalisée en un matériau souple avec un élément externe à cette enveloppe tel que connu par exemple du document FR-A-2574369. Elle s'applique en particulier à un dispositif permettant l'accouplement entre la zone polaire d'un ballon spatial de grand volume et une structure externe en vue de transmettre des efforts ou des couples à ce ballon.

Les problèmes posés par la réalisation de ballons aérostatiques de grands volumes capables de résister à de fortes surpressions tout en présentant un poids relativement modéré sont actuellement solutionnés. Ces ballons, tels que notamment décrits dans le brevet français déposé sous le nº 84.18798 (FR-A-2574369) au nom du demandeur sont constitués d'au moins une enveloppe interne contenant de l'hélium, et d'une enveloppe externe contenant les enveloppes internes et de l'air qui confère au ballon sa forme générale cylindrique. L'aptitude de l'enveloppe externe à supporter des surpressions élevées permet l'utilisation de tels ballons pour le transport de charges importantes, le levage des charges et le pilotage vertical aérostatique étant assurés par simple ballastage de l'air.

Une application consiste à réaliser, pour des opérations où la fonction de levage est prépondérante (utilisation en tant que grues...), un dispositif de levage aérostatique associé à un treuillage mécanique horizontal. Ce dispositif est réalisé au moyen d'un ballon captif relié au sol à trois points fixes ou auto-moteurs. Il peut être constitué d'un ballon aérostatique simple, non équipé de moyens propres de déplacement ou également, pour le levage de charges plus importantes, d'un engin aérostatique réalisé par la combinaison de plusieurs ballons amarrés sur des structures externes. Une telle application permet le déplacement de charges importantes sur de courtes distances, mais est limitée au niveau de ses possibilités opérationnelles par la présence des câbles et la nécessité d'une zone dégagée. A cet effet, une amélioration peut être obtenue en réalisant le treuillage horizontal du dispositif au moyen d'un aéronef séparé, apte à réaliser un point fixe (hélicoptère ou dirigeable). Cependant, ces deux applications nécessitent la mise en œuvre de forces de traction importantes afin de réaliser le treuillage horizontal du ou des ballons. Ces efforts transversaux sont transmis par l'intermédiaire de dispositifs d'accouplement aux pièces polaires des ballons. Compte tenu des petites dimensions de ces pièces polaires et de l'inertie de l'ensemble, les contraintes s'exerçant dans l'enveloppe au niveau de sa zone polaire sont donc très importantes et peuvent entraîner la détérioration et même la rupture de la liaison entre cette enveloppe et la pièce polaire. Les dispositifs pour l'accouplement de l'enveloppe et des moyens de treuillage horizontal pour un ballon isolé ou de l'enveloppe et de la structure externe, pour une combinaison de ballons, doivent donc être étudiés avec soin afin de permettre la transmission d'efforts transversaux importants.

Au-delà de ces deux applications, des projets plus ambitieux consistent à réaliser par combinaison de ballons aérostatiques des dirigeables équipés de groupes de propulsion horizontale et de tous les organes auxiliaires nécessaires, en vue du transport de charges lourdes et encombrantes sur de longues distances. La réalisation de ces dirigeables nécessite une étude aérodynamique visant à réduire la traînée des ballons assemblés. Il peut être intéressant d'obtenir cette réduction de la traînée grâce à la mise en rotation de ces ballons autour de leur axe longitudinal. Il est à noter que dans le domaine des structures spatiales gonflables, cette mise en rotation peut également permettre la création d'une pesanteur artificielle. Vu l'inertie des ballons, cet entraînement en rotation oblige à les accoupler aux structures externes au moyen de dispositifs permettant la transmission de couples importants.

La présente invention se propose d'apporter une solution aux problèmes ci-dessus évoqués et de fournir un dispositif pour l'accouplement d'une enveloppe et d'un élément externe permettant de transmettre des efforts importants à ladite enveloppe.

A cet effet, l'objectif essentiel de l'invention est de faire prendre en compte par la totalité ou une grande partie d'une enveloppe les efforts ponctuels ou les couples, transmis au niveau d'un pôle de ladite enveloppe.

Un autre objectif de l'invention est de fournir un dispositif d'accouplement apte à remplir un rôle d'amortisseur entre une enveloppe et un élément externe.

Un autre objectif est de fournir un dispositif d'accouplement apte à s'adapter aux différences de forme d'une enveloppe soumise à des variations de surpression intérieure.

Le dispositif visé par l'invention pour l'accouplement d'une enveloppe gonflable avec un élément externe comprend :

— un ballonnet réalisé en un matériau souple et comprenant deux pièces de fixation agencées sur deux zones opposées de la surface externe dudit ballonnet,

— des moyens d'accouplement de l'enveloppe et d'une des pièces de fixation du ballonnet adaptés pour positionner ledit ballonnet de façon à créer une surface de contact entre le ballonnet et l'enveloppe,

— des moyens de liaison de l'autre pièce de fixation du ballonnet sur l'élément externe.

Généralement, le ballonnet et l'enveloppe présentent une symétrie de révolution autour d'un axe. Selon la présente invention, le dispositif est alors caractérisé en ce que :

— les pièces de fixation du ballonnet sont situées sur l'axe de révolution afin de constituer les pôles dudit ballonnet,

— les moyens d'accouplement sont adaptés pour positionner l'axe de révolution du ballonnet approximativement dans le prolongement de l'axe de révolution de l'enveloppe.

Ainsi, comme on le comprendra mieux plus loin, l'application d'un effort transversal ou d'un couple au niveau de l'élément externe est transmis à l'enveloppe par l'intermédiaire du ballonnet au niveau de la surface de contact dudit ballonnet et de ladite enveloppe. La superficie de cette surface de contact permet d'obtenir des contraintes dans l'enveloppe beaucoup plus faibles que les contraintes de cisaillement que subirait celle-ci si l'effort était transmis directement au niveau de son axe de révolution. De plus, la transmission de l'effort par une surface de contact éloignée de l'axe de révolution permet de faire prendre en compte cet effort par une grande partie de l'enveloppe.

Par contre, la transmission de l'effort de l'élément externe au niveau de l'axe du ballonnet entraîne des contraintes importantes dans l'enveloppe dudit ballonnet. A cet effet, ce ballonnet de petites dimensions peut être doté, à moindre coût, d'une résistance élevée le mettant à l'abri de toute détérioration et lui permettant de supporter des surpressions élevées, conduisant à une rigidification du contact entre ce ballonnet et l'enveloppe.

En outre, afin de diminuer les contraintes sollicitant le ballonnet, celui-ci comprend selon une autre caractéristique de l'invention, des pièces de fixation présentant une symétrie de révolution autour de l'axe de révolution du ballonnet et délimitant dans le plan orthogonal audit axe, des diamètres de longueurs différentes, la pièce de fixation en liaison avec l'élément externe délimitant un diamètre de longueur supérieure au diamètre de la pièce de fixation accouplée à l'enveloppe.

Le diamètre de la pièce de fixation de dimensions supérieures est compris, préférentiellement, approximativement entre le tiers et les trois-quarts du diamètre de la section transversale délimitée par le ballonnet. Ces dimensions permettent de transmettre les efforts avec un bras de levier important qui entraîne la diminution des contraintes sollicitant le ballonnet.

Ce dispositif peut être utilisé pour l'accouplement d'une enveloppe dont la surpression intérieure est variable, avec un élément externe. Selon la présente invention, le ballonnet comprend alors des moyens de pilotage de sa surpression intérieure, destinés à faire varier ladite surpression en fonction de l'intensité de l'effort à transmettre et de l'effort de contact entre le ballonnet et l'enveloppe de façon à maintenir un contact approprié entre ledit ballonnet et ladite enveloppe.

En effet, les caractéristiques de la surface de contact entre l'enveloppe et le ballonnet dépendent essentiellement, d'une part des formes respectives de l'enveloppe et du ballonnet, et d'autre part des surpressions relatives de cette enveloppe et de ce ballonnet. Ces caractéristiques déterminant l'intensité de l'effort, couple ou effort transversal, que le dispositif est apte à transmettre à l'enveloppe, il est essentiel de pouvoir les adapter à cet effort. Or, à une surpression relative et une forme données de l'enveloppe et à un effort à transmettre donné, correspond une surpression relative du ballonnet permettant d'obtenir un contact approprié à la transmission de cet effort. Le pilotage de cette surpression du ballonnet permet donc, pour un effort à transmettre donné, de maintenir un contact approprié entre enveloppe et ballonnet.

Selon un mode de réalisation préférentiel, les moyens de pilotage de la surpression intérieure du ballonnet comprennent un dispositif de mesure de l'effort de traction sollicitant les moyens d'accouplement, et des moyens de régulation de la surpression du ballonnet en fonction directe dudit effort de traction et de l'effort externe à transmettre à l'enveloppe.

En effet, une modification de la forme de l'enveloppe entraîne une modification des caractéristiques de la surface de contact entre l'enveloppe et le ballonnet et, par conséquent, une variation de la force de traction qui tend à désaccoupler les deux enveloppes et qui s'exerce au niveau des moyens d'accouplement. Cet effort de traction donne donc une image représentative des caractéristiques de la surface de contact et le dispositif de mesure, qui adapte la surpression intérieure du ballonnet, en fonction directe de cet effort de traction permet de conserver un effort de contact approprié à la transmission des efforts extérieurs à l'enveloppe.

D'autres caractéristiques, buts et avantages de l'invention se dégageront de la description détaillée qui suit et de l'examen des dessins annexés qui en présentent, à titre d'exemple non limitatif, un mode de réalisation. Sur ces dessins qui font partie intégrante de la description :

— la figure 1 est une coupe longitudinale d'un dispositif d'accouplement selon l'invention,

— la figure 2 en est une coupe selon un plan A. A'.,

— la figure 3 est une vue schématique en coupe axiale verticale d'un ensemble aérostatique réalisé au moyen de ballons amarrés sur la structure de cet ensemble par l'intermédiaire du dispositif d'accouplement.

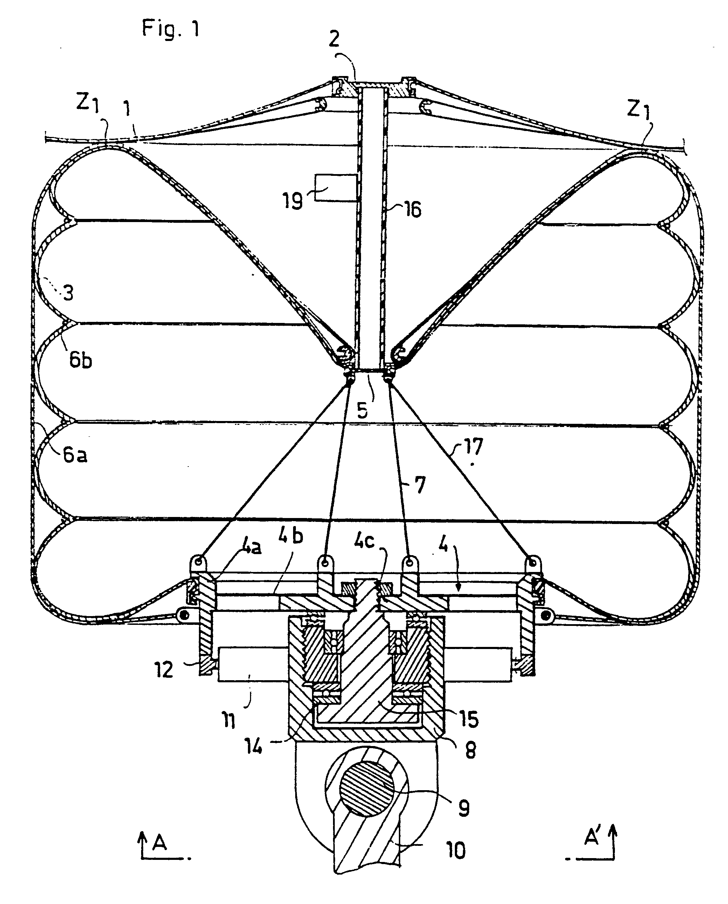

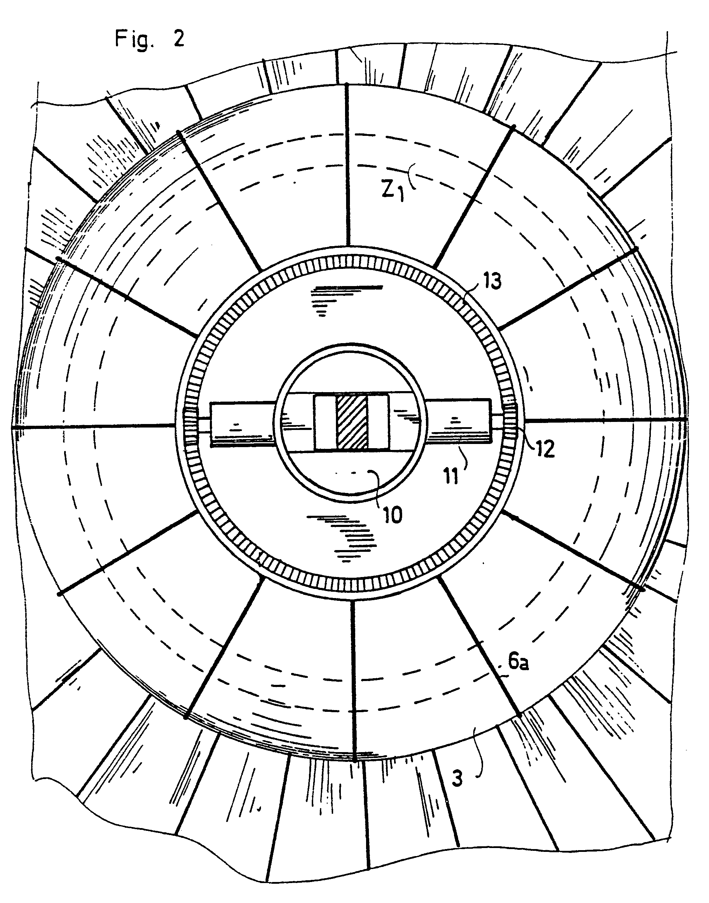

Le dispositif d'accouplement représenté à titre d'exemple aux figures 1 et 2 est destiné à l'accouplement d'une enveloppe et d'un élément externe passant dans le prolongement de l'axe de cette enveloppe. Il s'applique en particulier pour l'accouplement de la zone polaire d'une enveloppe de ballon spatial de forme générale cylindrique et d'un élément externe passant dans le prolongement de l'axe longitudinal de ce ballon.

Ce ballon, tel que par exemple décrit dans le brevet FR déposé sous le n° 84.18798 (FR-A-2574369), est constitué notamment d'une enveloppe 1 externe réalisée au moyen d'un matériau composite comprenant une chaîne longitudinale de haute résistance, du type « Kevlar ». Les extrémités froncées de cette enveloppe sont accrochées sur des pièces polaires 2, telles que par exemple décrites dans la demande de brevet français récemment déposée sous le n° 85.05674 (FR-A-2580343) au nom du demandeur, situées dans l'axe de cette enveloppe et aptes à reprendre des efforts importants.

Le dispositif d'accouplement comprend un ballonnet 3 réalisé au moyen d'une enveloppe présentant une portion cylindrique qui se prolonge par des portions extrêmes froncées dont les bords sont rattachés sur des pièces polaires (pièces de fixation) 4 et 5 disposées aux pôles, inférieur et supérieur, de l'enveloppe sur l'axe de celle-ci.

Le matériau constitutif de l'enveloppe du ballonnet 3 est un matériau composite étanche à l'air possédant une chaîne longitudinale à base de « Kevlar ». En outre, cette enveloppe est entourée d'un réseau de renforts longitudinaux tels que 6a situés dans des plans méridiens répartis autour de l'enveloppe et d'un réseau de renforts circonférentiels tels que 6b s'étendant transversalement le long de cette enveloppe. Les renforts longitudinaux 6a sont fixés au niveau des pôles du ballonnet sur les pièces polaires 4 et 5, tandis que les renforts circonférentiels 6b sont fixés sur l'enveloppe du ballonnet 3 de façon que pour l'état gonflé dudit ballonnet, chaque renfort se trouve au contact de l'enveloppe sur toute sa périphérie. Sur les pièces polaires est également rattaché un faisceau de câbles interpolaires tels que 7 disposés à l'intérieur de l'enveloppe dans l'axe de celle-ci. Ces renforts, longitudinaux et transversaux et ces câbles sont réalisés en un matériau du type « Kevlar » et tendent à conférer, en combinaison avec la résistance propre de l'enveloppe, une résistance élevée au ballonnet.

Les pièces polaires 4 et 5 de forme annulaire définissent les pôles, supérieur et inférieur, du ballonnet et possèdent des diamètres de longueurs différentes. La pièce polaire de diamètre supérieur 4 est constituée par une jante annulaire 4a munie d'une gorge destinée à servir de logement de blocage des extrémités de l'enveloppe sur sa face périphérique externe. Cette jante 4b est raidie dans son plan transversal par au moins un disque 4b rigide reliant le noyau central 4c de cette pièce polaire à sa périphérie 4a.

De plus, cette pièce 4 polaire est solidaire de moyens d'entraînement destinés à entraîner le ballonnet en rotation. Ces moyens d'entraînement comprennent un ensemble 8 fixe par rapport au ballonnet et relié par l'intermédiaire d'un axe d'articulation 9 à un arbre 10 solidaire d'un élément externe au ballonnet 3. Sur cet ensemble 8 sont agencés deux moteurs d'entraînement tels que 11 qui actionnent la mise en rotation, autour d'un axe radial perpendiculaire à l'axe longitudinal du ballonnet, de deux pignons tels que 12. Ces pignons 12 sont agencés pour coopérer avec une roue 13 dentée solidaire de la jante 4a de la pièce 4 polaire afin d'entraîner cette pièce en rotation autour de l'axe longitudinal du ballonnet.

Le diamètre de la pièce polaire 4, approximativement compris entre le tiers et les trois quarts du diamètre de la section transversale délimitée par la gaine du ballonnet permet, lors de l'entraînement en rotation de ce ballonnet d'intéresser la totalité ou une grande partie de l'enveloppe dudit ballonnet et de créer un bras de levier important permettant la transmission de couples élevés.

En outre, l'ensemble 8 se trouve en contact par l'intermédiaire de butées à billes 14 avec un organe d'assemblage 15 relié mécaniquement au noyau 4c central de la pièce polaire 4 et peut donc ainsi permettre la transmission d'efforts transversaux au ballonnet.

La pièce 5 polaire de diamètre inférieur est constituée d'une pièce annulaire telle que décrite dans la demande de brevet français déposée sous le n° 85.05674 au nom du demandeur. Cette pièce polaire est solidaire d'un organe d'accouplement 16 réalisé en un matériau flexible de haute résistance à la traction et dont l'autre extrémité est destinée à être fixée sur la pièce polaire 2 d'un ballon de grand volume tel que nous le verrons ci-après. Cet organe d'accouplement peut, par exemple, être constitué d'un réseau de câbles en un matériau du type « Kevlar ».

Cette pièce polaire 5 est reliée à la jante 4a de la pièce 4 polaire par un réseau de câbles 17 de haute résistance à la traction du type « Kevlar ». Ces câbles permettent d'assurer un positionnement stable de la pièce polaire 4, évitant notamment l'inclinaison de cette pièce 4 lors de la transmission d'efforts transversaux au ballonnet 3. Cette inclinaison entraînerait en effet des surtensions dans l'enveloppe du ballonnet au niveau de son accrochage sur la pièce polaire 4, qui pourraient provoquer une détérioration dudit ballonnet.

De plus, la présence de ces câbles 17, en association avec la présence du faisceau de câbles 7 interpolaires permet par une opération facile le réglage de la distance entre pôles. Ce réglage permet notamment de réduire cette distance interpolaire de façon à maintenir la pièce polaire 5 de diamètre inférieur, en retrait par rapport au fond froncé du ballonnet 3.

La pièce polaire 5 est, enfin, munie de moyens d'admission et de rejet d'air dans le ballonnement 3. Ces moyens, non représentés sur les dessins annexés, peuvent être réalisés par tout moyen connu de la technique actuelle. Ils peuvent par exemple être constitués d'une vanne 3 voies qui permettrait, soit d'évacuer de l'air, soit d'admettre de l'air parvenant d'un turbocompresseur ou tout autre moyen équivalent.

Le ballonnet, tel que décrit ci-avant, est initialement gonflé, sans surpression relative avec un gaz plus léger que l'air, par exemple de l'hélium, afin de le rendre autoportable, puis amené à son état de plénitude par admission d'air. Ce ballonnet est ensuite positionné grâce à un système de tripode ou tout autre moyen connu en regard de la zone polaire d'un ballon aérostatique de grand volume, puis relié à la pièce 2 polaire de ce ballon par l'intermédiaire de l'organe d'accouplement 16. Dans cette position, le fond du ballonnet se trouve en contact avec la zone polaire de l'enveloppe 1 du ballon. Il est à noter que cette surface de contact Z1 se trouve dans la partie froncée et donc la plus résistante de l'enveloppe.

La rigidification du contact entre le ballonnet et le ballon au niveau de la surface de contact Z1 est réalisé au moyen d'une admission supplémentaire d'air dans le ballonnet. Afin de pouvoir contrôler les contraintes s'exerçant entre les enveloppes au niveau de leur surface de contact Z1, le ballonnet comprend des moyens de mesure 19 de la force de traction s'exerçant dans l'organe d'accouplement 16. En effet, cette force qui tend à désaccoupler les enveloppes est une fonction directe de la réaction s'exerçant au niveau de la surface de contact Z1 et, par conséquent, de la surpression intérieure relative du ballonnet. Ces moyens de mesure pilotent donc les moyens d'admission et de rejet d'air du ballonnet afin d'obtenir un contact approprié à l'effort à transmettre à l'enveloppe.

En outre, le ballon aérostatique accouplé au ballonnet visant à permettre un pilotage aérostatique par variation de masses gazeuses, la surpression relative intérieure et la forme de ce ballon sont donc variables.

Afin de conserver un contact approprié entre enveloppes respectives permettant la transmission des efforts malgré la variation de surpression intérieure du ballon, le pilotage de la surpression intérieure du ballonnet est assuré en fonction d'une valeur de référence de la force de traction s'exerçant dans l'organe d'accouplement 16. Cette valeur de référence est déterminée en fonction de différents paramètres relatifs aux efforts à transmettre à l'enveloppe, aux pressions relatives intérieures du ballonnet et de l'enveloppe...

Cet accouplement entre un ballon aérostatique et un ballonnet 3 apte à jouer un rôle d'amortisseur, permet donc la transmission d'efforts ou de couples importants entre un élément externe et un ballon aérostatique, sans risque de détérioration dudit ballon. En effet, le diamètre de la section transversale du ballonnet compris approximativement entre le quart et le tiers du diamètre de la section transversale du ballon, permet la transmission de ces efforts au niveau d'une surface de contact éloignée de l'axe longitudinal du ballon. Ces efforts, couple ou effort transversal, sont donc transmis avec un bras de levier important qui entraîne une répartition des contraintes dans la totalité ou une grande partie de l'enveloppe du ballon. Les pièces polaires mécaniques de petite taille sont donc protégées, et ce d'autant plus que la flexibilité de l'organe d'accouplement 16 permet un léger désaxement des deux enveloppes, lors de la transmission d'efforts transversaux par exemple, sans création de contraintes de cisaillement élevées au niveau de la liaison entre les pièces 2 et 5 polaires et les enveloppes respectives du ballon et du ballonnet.

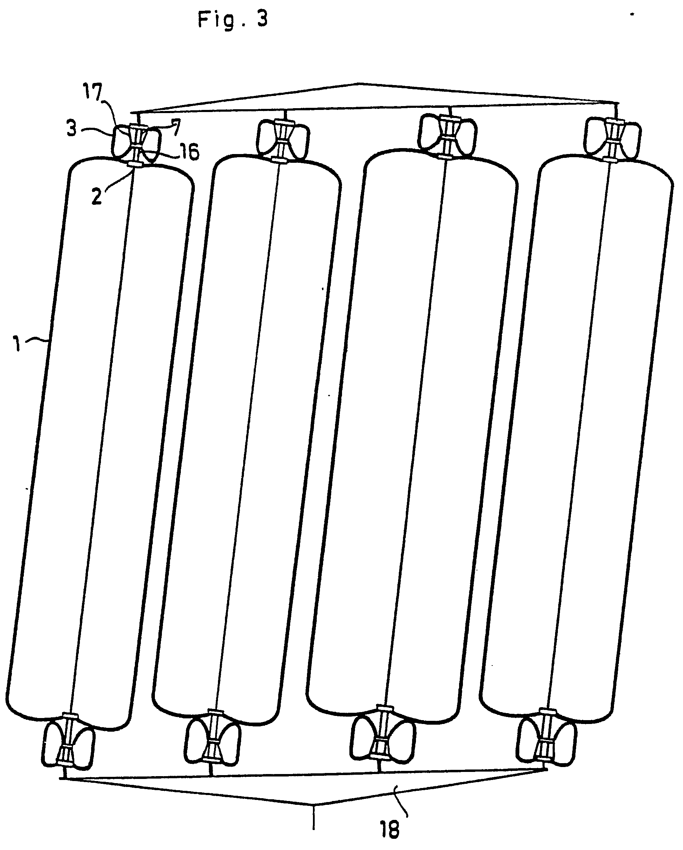

Ce ballonnet d'accouplement peut être utilisé pour accoupler un ballon aérostatique à tout moyen de traction permettant son treuillage horizontal. Il peut également permettre l'amarrage de ballons aérostatiques sur des structures, inférieure et supérieure, en vue de réaliser par combinaison d'ensembles ballonnets/ballon des dirigeables aérostatiques tels que représentés fig. 3.

**Revendications**

1. Dispositif pour l'accouplement d'une enveloppe gonflable (1) en matériau souple avec un élément externe, ledit dispositif étant caractérisé en ce qu'il comprend :
— un ballonnet (3) en matériau souple comprenant deux pièces de fixation (4, 5) agencées sur deux zones opposées de la surface dudit ballonnet,
— des moyens d'accouplement (2, 16) de l'enveloppe et d'une des pièces de fixation (5) du ballonnet (3) adaptés pour positionner ledit ballonnet de façon à créer une surface de contact (Z1) entre le ballonnet (3) et l'enveloppe (1),
— des moyens de liaison (8-15) de l'autre pièce de fixation (4) du ballonnet (3) avec l'élément externe.

2. Dispositif selon la revendication 1, dans lequel le ballonnet (3) et l'enveloppe (1) présentent une symétrie de révolution autour d'un axe et caractérisé en ce que :
— les pièces de fixation (4, 5) du ballonnet (3) sont situées sur l'axe de révolution dudit ballonnet, afin de constituer les pôles dudit ballonnet,
— les moyens d'accouplement sont adaptés pour positionner l'axe de révolution du ballonnet approximativement dans le prolongement de l'axe de révolution de l'enveloppe.

3. Dispositif selon l'une des revendications 1 ou 2, caractérisé en ce que le diamètre de la section transversale du ballonnet est compris sensiblement entre le quart et le tiers du diamètre de la section transversale de l'enveloppe (1).

4. Dispositif selon l'une des revendications 1, 2 ou 3, caractérisé en ce que le ballonnet (3) comprend des pièces de fixation (4, 5) présentant une symétrie de révolution autour de l'axe de révolution du ballonnet et délimitant dans le plan orthogonal audit axe de révolution des diamètres de longueur différente, la pièce de fixation (4) en liaison avec l'élément externe délimitant un diamètre de longueur supérieure au diamètre de la pièce de fixation (5) accouplée à l'enveloppe (1).

5. Dispositif selon la revendication 4, caractérisé en ce que le ballonnet (3) comprend en regard de l'élément externe une pièce de fixation (4) délimitant dans un plan orthogonal à son axe de révolution, un diamètre de longueur approximativement compris entre le tiers et les trois quarts du diamètre de la section transversale du ballonnet (3).

6. Dispositif selon l'une des revendications précédentes, dans lequel les pièces de fixation (4, 5) sont reliées par un réseau de câbles (7, 17) de haute résistance à la traction en vue d'assurer le positionnement relatif desdites pièces de fixation (4, 5).

7. Dispositif selon l'une des revendications précédentes, caractérisé en ce que les moyens de liaison (8-15) comprennent des moyens d'entraînement (8, 11, 12, 13, 14, 15) aptes à entraîner ledit ballonnet (3) en rotation sensiblement autour de l'axe de révolution du ballonnet.

8. Dispositif selon l'une des revendications précédentes, dans lequel l'enveloppe (1) est constituée d'une gaine dont les extrémités sont rassemblées et fixées sur des pièces d'accrochage (2) situées sur l'axe de cette enveloppe, ledit dispositif étant caractérisé en ce que les moyens d'accouplement (2, 16) du ballonnet (3) et de l'enveloppe (1) comprennent un organe d'accouplement (16) flexible de haute résistance à la traction dont les extrémités sont fixées respectivement sur une pièce de fixation (5) du ballonnet et sur une pièce d'accrochage (2) de l'enveloppe.

9. Dispositif selon l'une des revendications précédentes, caractérisé en ce que le ballonnet (3) comprend des moyens de pilotage de sa surpression intérieure adaptés pour faire varier ladite surpression en fonction de l'intensité de l'effort à transmettre à l'enveloppe et de l'effort de contact entre le ballonnet et l'enveloppe, en vue de maintenir un contact approprié entre ladite enveloppe et ledit ballonnet.

10. Dispositif selon la revendication 9, caractérisé en ce que les moyens de pilotage de la surpression du ballonnet comprennent un dispositif de mesure (19) de l'effort de traction sollicitant l'organe d'accouplement (16) et des moyens de régulation de la surpression du ballonnet en fonction directe dudit effort de traction et de l'effort externe à transmettre à l'enveloppe (1).

11. Dispositif selon l'une des revendications précédentes, dans lequel le ballonnet (3) est réalisé au moyen d'une gaine de forme générale cylindrique dont les extrémités sont rassemblées et fixées sur des pièces polaires (4, 5) situées sur l'axe longitudinal de ladite gaine et définissant les pôles, supérieur et inférieur, dudit ballonnet.

12. Dispositif selon l'une des revendications précédentes dans lequel le ballonnet (3) comprend :

— un réseau de renforts (6a) longitudinaux, réalisés en un matériau de haute résistance à la traction, s'étendant longitudinalement le long du ballonnet et dont les extrémités sont rattachées aux pièces polaires (4, 5),

— un réseau de renforts (6b) circonférentiels réalisés en un matériau de haute résistance à la traction et s'étendant transversalement autour du ballonnet (3) de façon, que pour l'état gonflé du ballonnet, chaque renfort (6b) se trouve au contact de celui-ci sur toute sa périphérie.

13. Dispositif selon la revendication 12, caractérisé en ce que :

— le pôle supérieur d'une enveloppe est accouplé à la pièce (5) polaire de diamètre inférieur d'un ballonnet (3),

— le pôle inférieur de cette enveloppe est accouplé à la pièce (5) polaire de diamètre inférieur d'un deuxième ballonnet,

— chaque ballonnet est fixé par l'intermédiaire de moyens de liaison (8-15) à une structure externe passant dans le prolongement de l'axe de révolution de l'ensemble ballonnets/enveloppe, afin de constituer un module aérostatique.

## Claims

1. Device for joining an inflatable envelope (1) consisting of flexible material with an external element, said device being characterised in that it comprises :

— a small balloon (3) consisting of flexible material and comprising two attachment units (4, 5) provided in two opposite areas of the surface of said small balloon,

— means for joining (2, 16) the envelope with one of the attachment units (5) of the small balloon (3), designed so as to position said small balloon in a way bringing about a contact surface (Z1) between small balloon (3) and envelope (1),

— means for joining (8-15) the other attachment unit (4) of small balloon (3) with the external element.

2. Device according to claim 1, in which the small balloon (3) and envelope (1) exhibit symmetry of revolution about an axis and characterised in that :

— the attachment units (4, 5) of small balloon (3) are situated on the axis of revolution of said small balloon so as to constitute the poles of said small balloon,

— the means for joining are designed so as to position the axis of revolution of the small balloon approximately within the extension of the axis of revolution of the envelope.

3. Device according to one of claims 1 or 2, characterised in that the diameter of the cross-section of the small balloon is comprised substantially between a quarter and a third of the diameter of the cross-section of envelope (1).

4. Device according to one of claims 1, 2 or 3, characterised in that balloon (3) comprises attachment units (4, 5) exhibiting symmetry of revolution about the axis of revolution of the small balloon and defining, within the plane at right angles to said axis of revolution, diameters of different length, attachment unit (4) in conjunction with the external element defining a diameter of greater length than the diameter of attachment unit (5) joined to envelope (1).

5. Device according to claim 4, characterised in that small balloon (3) comprises in respect of the external element an attachment unit (4) defining within a plane at right angles to its axis of revolution a diameter of a length comprised approximately between a third and three quarters of the diameter of the cross-section of small balloon (3).

6. Device according to one of the preceding claims, in which the attachment units (4, 5) are joined by a network of cables (7, 17) of high tensile strength, with a view to ensuring the relative positioning of said attachment units (4, 5).

7. Device according to one of the preceding claims, characterised in that the joining means (8-15) comprise driving means (8, 11, 12, 13, 14, 15) capable of driving said small balloon (3) in rotation substantially about the axis of revolution of the small balloon.

8. Device according to one of the preceding claims, in which envelope (1) comprises a sheath, the ends of which are assembled and secured to attachment units (2) situated on the axis of said envelope, said device being characterised in that the means for joining (2, 16) balloon (3) and envelope (1) comprise a flexible coupling device (16) of high tensile strength, the ends of which are secured respectively to an attachment unit (5) of the small balloon and to an attachment unit (2) of the envelope.

9. Device according to one of the preceding claims, characterised in that small balloon (3) comprises means for controlling its internal excess pressure and so designed as to cause said excess pressure to vary as a function of the intensity of the force to be transmitted to the envelope and of the force of contact between the small balloon and the envelope, with a view to maintaining an appropriate contact between said envelope and said small balloon.

10. Device according to claim 9, characterised in that the means for controlling the excess pressure of the small balloon comprise a device for measuring (19) the tensile force acting upon the coupling device (16) and means for regulating the excess pressure of the small balloon as a direct function of said tensile force and of the external force to be transmitted to envelope (1).

11. Device according to one of the preceding claims, in which small balloon (3) is made by means of a sheath of generally cylindrical form, the ends of which are assembled and secured to polar units (4, 5) situated on the longitudinal axis of said sheath and defining the upper and lower poles of said small balloon.

12. Device according to one of the preceding claims, in which the small balloon (3) comprises :
— a network of longitudinal reinforcements (6a) made from a material of high tensile strength and extending longitudinally along the small balloon, its ends being attached to the polar units (4, 5),
— a network of circumferential reinforcements (6b) made from a material of high tensile strength and extending transversely about small balloon (3) in such a way that in the inflated state of the small balloon each reinforcement (6b) is in contact with the latter along its entire periphery.

13. Device according to claim 12, characterised in that :
— the higher pole of an envelope is joined to the polar unit (5) of smaller diameter of a small balloon (3),
— the lower pole of that envelope is joined to the polar unit (5) of smaller diameter of a second small balloon,
— each small balloon is secured with the aid of joining means (8-15) to an external structure within the extension of the axis of revolution of the assembly small balloons/envelope so as to constitute an aerostatic module.

**Patentansprüche**

1. Vorrichtung zum Kuppeln einer aufblasbaren Umhüllung (1) aus flexiblem Material mit einem außerhalb dieser Umhüllung befindlichen Bestandteil, wobei die besagte Vorrichtung dadurch gekennzeichnet ist, daß sie die folgenden Teile umfaßt :
— einen Kleinballon (3) aus flexiblem Material mit zwei Befestigungsteilen (4, 5) in zwei gegenüberliegenden Bereichen der Oberfläche des besagten Kleinballons,
— Mittel zum Kuppeln (2, 16) der Umhüllung und eines der Befestigungsteile (5) des Kleinballons (3), die so beschaffen sind, daß sie den besagten Kleinballon so positionieren, daß zwischen dem Kleinballon (3) und der Umhüllung (1) eine Kontaktfläche (Z1) entsteht,
— Mittel zum Verbinden (8-15) des zweiten Befestigungsteils (4) des Kleinballons (3) mit dem Außenteil.

2. Vorrichtung nach Anspruch 1, bein der der Kleinballon (3) und die Umhüllung (1) Rotationssymmetrie um eine Achse aufweisen und dadurch gekennzeichnet, daß
— die Befestigungsteile (4, 5) des Kleinballons (3) entlang der Drehachse des besagten Kelinballons angeordnet sind, so daß sie die Pole des besagten Kleinballons bilden,
— die Kuppelungsmittel so beschaffen sind, daß sie die Drehachse des Kleinballons annähernd in der Verlängerung der Drehachse der Umhüllung positionieren.

3. Vorrichtung nach einem der Ansprüche 1 oder 2, dadurch gekennzeichnet, daß der Durchmesser des Kleinballonquerschnitts im wesentlichen zwischen einem Viertel und einem Drittel des Durchmessers des Querschnitts der Umhüllung (1) beträgt.

4. Vorrichtung nach einem der Ansprüche 1, 2 order 3, dadurch gekennzeichnet, daß der Kleinballon (3) Befestigungsteile (4, 5) umfaßt, die Rotationssymmetrie um die Drehachse des Ballons aufweisen und in der zu der besagten Drehachse senkrechten Ebene Durchmesser verschiedener Länge bedingen, wobei Befestigungsteil (4) in Verbindung mit dem Außenteil einen Durchmesser bedingt, der länger ist als der Durchmesser des mit Umhüllung (1) gekuppelten Befestigungsteils (5).

5. Vorrichtung nach Anspruch 4, dadurch gekennzeichnet, daß der Kleinballon (3) hinsichtlich des Außenteils ein Befestigungsteil (4) umfaßt, das in einer zu seiner Drehachse senkrechten Ebene einen Durchmesser bedingt, dessen Länge annähernd zwischen einem Drittel und drei Vierteln des Durchmessers des Querschnitts von Kleinballon (3) ausmacht.

6. Vorrichtung nach einem der vorstehenden Ansprüche, bein der die Befestigungsteile (4, 5) mit einem Netwerk von Kabeln (7, 17) hoher Zugfestigkeit in Verbindung stehen, um die relativen Positionen der besagten Befestigungsteile (4, 5) zu gewährleisten.

7. Vorrichtung nach einem der vorstehenden Ansprüche, dadurch gekennzeichnet, daß die Verbindungsmittel (8-15) Antriebsmittel (8, 11, 12, 13, 14, 15) umfassen, die zu Rotationsantrieb des besagten Kleinballons (3) im wesentlichen um die Drehachse des Kleinballons in der Lage sind.

8. Vorrichtung nach einem der vorstehenden Ansprüche, bei der die Umhüllung (1) aus einer Hülle besteht, deren Enden an Befestigungsteile (2) an der Achse der besagten Umhüllung angebracht und befestigt sind, wobei die besagte Vorrichtung dadurch gekennzeichnet ist, daß die Kuppelungsmittel (2, 16) des Kleinballons (3) und der Umhüllung (1) eine flexible Kuppelungsvorrichtung (16) hoher Zugfestigkeit umfassen, deren Enden an einem Befestigungsteil (5) des Kleinballons bzw. einem Befestigungsteil (2) der Umhüllung befestigt sind.

9. Vorrichtung nach einem der vorstehenden Ansprüche, dadurch gekennzeichnet, daß der Kleinballon (3) Mittel zur Regelung seines inneren Überdrucks umfaßt, die so beschaffen sind, daß sie Änderung des besagten Überdrucks in Abhägigkeit von der Höhe der auf die Umhüllung zu übertragenden Kraft und der Kraft des Kontakts zwischen dem Kleinballon und der Umhüllung gestatten, so daß zwischen der besagten Umhüllung und dem besagten Kleinballon ein entsprechender Kontakt aufrechterhalten wird.

10. Vorrichtung nach Anspruch 9, dadurch gekennzeichnet, daß die Mittel zur Regelung des Kleinballonüberdrucks eine Vorrichtung zum Messen (19) der auf die Kuppelungsvorrichtung (16) einwirkenden Zugkraft sowie Mittel zur Regelung des Kleinballonüberdrucks in unmittelbarer Abhängigkeit von der Zugkraft und der auf die Umhüllung (1) zu übertragenden äußeren Kraft umfaßt.

11. Vorrichtung nach einem der vorstehenden Ansprüche, bei der der Kleinballon (3) aus einer Hülle von allgemein zylindrischer Form besteht, deren Enden an Polteile (4, 5) an der Längsachse der besagten Hülle angebracht und befestigt sind und den oberen und den unteren Pol des besagten Kleinballons bilden.

12. Vorrichtung nach einem der vorstehenden Ansprüche, bei der der Kleinballon (3) die folgenden Teile umfaßt :
— ein Netzwerk von Längsverstärkungen (6a) aus einem Material hoher Zugfestigkeit, das sich der Länge nach entlang des Kleinballons erstreckt und dessen Enden an den Polteilen (4, 5) angebracht sind,
— ein Netzwerk von Umfangsverstärkungen (6b) aus einem Material hoher Zugfestigkeit, das sich in Querrichtung um den Kleinballon (3) so erstreckt, daß im aufgeblasenen Zustand des Kleinballons jede Verstärkung (6b) sich mit diesem entlang seines ganzen Umfangs in Kontakt befindet.

13. Vorrichtung nach Anspruch 12, dadurch gekennzeichnet, daß
— der obere Pol einer Umhüllung mit dem Polteil (5) kleineren Durchmessers eines Kleinballons (3) gekuppelt ist,
— daß der untere Pol der besagten Umhüllung mit dem Polteil (5) kleineren Durchmessers eines zweiten Kleinballons gekuppelt ist,
— jeder Kleinballon mit Hilfe von Verbindungsmitteln (8-15) an einer Außenstruktur befestigt ist, die in der Verlängerung der Drehachse der Gruppe Kleinballone/Umhüllung verläuft, so daß ein aerostatischer Modul gebildet wird.

Fig. 1

Fig. 2

Fig. 3